(19) Europäisches Patentamt / European Patent Office / Office européen des brevets

(11) **EP 2 788 689 B1**

(12) **EUROPÄISCHE PATENTSCHRIFT**

(45) Veröffentlichungstag und Bekanntmachung des Hinweises auf die Patenterteilung:
**12.06.2019 Patentblatt 2019/24**

(21) Anmeldenummer: **12794849.5**

(22) Anmeldetag: **28.11.2012**

(51) Int Cl.:
**F24D 3/14** *(2006.01)*     **F24D 19/10** *(2006.01)*
**G05D 23/19** *(2006.01)*

(86) Internationale Anmeldenummer:
**PCT/CH2012/000263**

(87) Internationale Veröffentlichungsnummer:
**WO 2013/078570 (06.06.2013 Gazette 2013/23)**

(54) **VERFAHREN ZUR REGELUNG DER RAUMTEMPERATUR IN EINEM ODER EINER GRUPPE VON MEHREREN RÄUMEN SOWIE EINE VORRICHTUNG ZUR DURCHFÜHRUNG DES VERFAHRENS**

METHOD FOR REGULATING THE ROOM TEMPERATURE IN A ROOM OR IN A GROUP COMPRISING MULTIPLE ROOMS, AND APPARATUS FOR CARRYING OUT THE METHOD

PROCÉDÉ POUR LA RÉGULATION DE LA TEMPÉRATURE AMBIANTE DANS UN ESPACE OU UN GROUPE DE PLUSIEURS ESPACES, AINSI QUE DISPOSITIF POUR LA MISE EN ŒUVRE DU PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.11.2011 CH 18902011**

(43) Veröffentlichungstag der Anmeldung:
**15.10.2014 Patentblatt 2014/42**

(73) Patentinhaber: **Belimo Holding AG**
**8340 Hinwil (CH)**

(72) Erfinder:
• **SCHMIDLIN, Peter**
**CH-8610 Uster (CH)**

• **LEDERLE, Norbert**
**79725 Laufenburg (Baden) (DE)**

(74) Vertreter: **Rentsch Partner AG**
**Bellerivestrasse 203**
**Postfach**
**8034 Zürich (CH)**

(56) Entgegenhaltungen:
**EP-A2- 1 235 130     EP-A2- 1 235 131**
**EP-A2- 1 770 469     WO-A1-2008/039065**
**WO-A1-2009/156010     FR-A1- 2 931 226**

**Beschreibung**

TECHNISCHES GEBIET

Die vorliegende Erfindung bezieht sich auf das Gebiet der Heizungs- und Klimatechnik. Sie betrifft ein Verfahren zur Regelung der Temperatur in einem oder einer Gruppe von mehreren Räumen gemäss dem Oberbegriff des Anspruchs 1. Sie betrifft weiterhin eine Vorrichtung zur Durchführung des Verfahrens.

STAND DER TECHNIK

Üblicherweise sind im Stand der Technik Regelungseinrichtungen zur Regelung der Raumtemperatur in einem oder mehreren Räumen bekannt, bei denen ein im jeweiligen Raum angeordneter Temperatursensor die Temperatur im Raum aufnimmt und den Wert an eine Regelung übermittelt, die dann den in den Raum eingespeisten Wärmestrom verändert, wenn der gemessene Raumtemperaturwert mit einem voreingestellten Sollwert nicht übereinstimmt.

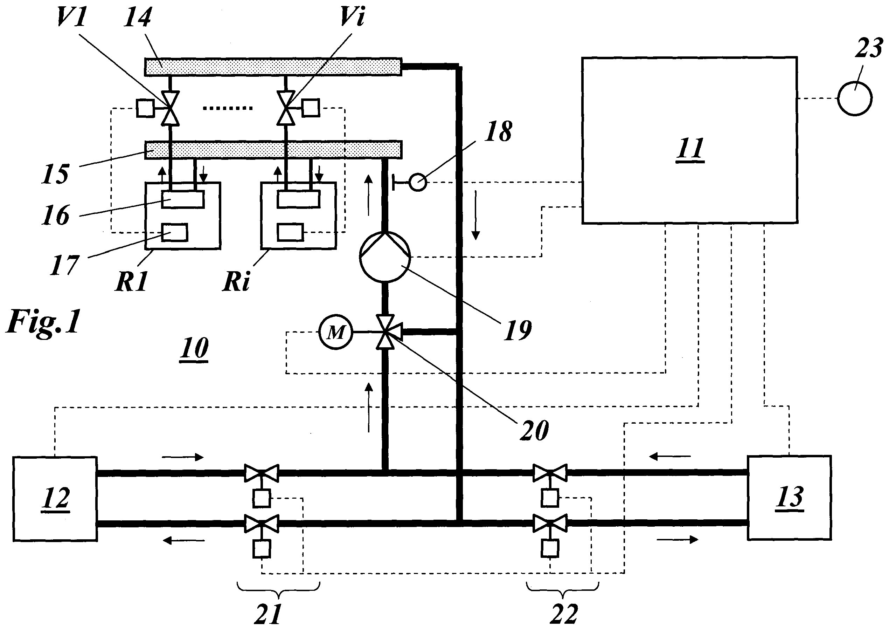

Ein für den speziellen Bereich der Flächenheizung/-kühlung ausgelegtes, herkömmliches hydraulisches und Regelschema einer kombinierten Heiz/Kühlanlage ist in Fig. 1 wiedergegeben. Die in Fig. 1 dargestellte Flächenheizung/-kühlung ist für die Heizung/Kühlung einer Mehrzahl von Räumen R1,..,Ri ausgelegt, in denen jeweils ein Wärmeübertrager 16 in Form einer Rohrschlange im Fussboden, in der Wand oder in der Decke verlegt ist. In jedem der Räume ist auch ein Raumtemperatursensor/-thermostat 17 installiert, der die jeweilige Raumtemperatur aufnimmt Zusätzlich können einzelne Temperatursensoren zur Adaption der Regelung mit dem Zentralregler 11 verbunden sein. Die Wärmeübertrager 16 sind an einen gemeinsamen Vorlaufverteiler 15 und einen Rücklaufsammler 14 angeschlossen. Eine Pumpe 19 pumpt eine Wärmeträgerflüssigkeit (Fluid) in eine Gruppe von Verteilern. Beispielsweise wird der Vorlauf des Vorlaufverteilers 15 wahlweise von einem Wärmeerzeuger 12 oder von einem Kälteerzeuger 13 gespiesen. Ob der Wärmeerzeuger oder der Kälteerzeuger aktiv ist, richtet sich nach der Einstellung zweier Umschaltvorrichtungen 21 und 22, welche wahlweise den Wärmeerzeuger 12 oder den Kälteerzeuger 13 mit den Sammlern bzw. Verteilern 14, 15 verbinden.

Über ein von einem Motor M angetriebenes 3-Wege-Ventil 20 kann Fluid in einstellbarer Menge aus dem Rücklauf in den Vorlauf zugemischt werden, um die Vorlauftemperatur zu verändern beziehungsweise zu regeln. Die Vorlauftemperatur wird von einem Vorlauftemperaturfühler 18 aufgenommen und an den Zentralregler 11 weitergeleitet. Mit dem Zentralregler 11 ist ein Aussentemperaturfühler 23 verbunden, der dafür sorgt, dass die Vorlauftemperatur nach Massgabe der jeweils herrschenden Aussentemperatur eingestellt werden kann.

Die Raumtemperatur in den Räumen R1,..,Ri wird durch die Raumtemperaturregler 17 geregelt, die auf zugeordnete Regelventile V1,..,Vi einwirken, welche den Massendurchfluss des Fluids durch den entsprechenden Wärmeübertrager 16 regeln.

Nachteilig ist bei dieser Art der Heizung/Kühlung und deren Regelung, dass das Regelergebnis einerseits massgeblich von der richtigen Platzierung des Raumtemperatursensors abhängt, wodurch die Freiheit der Raumgestaltung deutlich eingeschränkt ist. Andererseits führen die Speichereffekte des Wärmeübertragers, insbesondere unter Verwendung von Raumthermostaten, zu Abweichungen zwischen Bedarf und Angebot, welche zu einer Temperaturdrift und der Erhöhung des Energieeinsatzes führen.

Es ist in der Druckschrift EP 0 282 886 A2 bereits ein Verfahren zum Steuern der Vorlauftemperatur einer Anlage zur Übertragung von Wärmeenergie vorgeschlagen worden, welches Nebeneinflüsse, beispielsweise im Mauerwerk gespeicherte Wärme sowie innere Lasten, auf die Steuerung des Energiebedarfs einer Gruppe von Räumen berücksichtigt. Dies wird dadurch erreicht, dass der im Arbeitsmittelkreis verbrauchte Energiemengenstrom gemessen und danach die Vorlauftemperatur im Arbeitsmittelkreis mithilfe eines anlagenspezifischen dreidimensionalen Kennlinienblocks bestimmt wird, dessen Dimensionen durch die Vorlauf- und Rücklauftemperatur sowie den Umwälzmengenstrom des Arbeitsmittels der Anlage bestimmt sind. Die Regelung der Vorlauftemperatur erfolgt dabei durch ein 3-Wege-Ventil auf ähnliche Weise, wie dies in Fig. 1 dargestellt ist. Diese Art der Regelung führt bei einer Gruppe von Räumen/Verbrauchern zur Anpassung der Vorlauftemperatur an den mittleren Bedarf. Dabei kann eine Überversorgung von einzelnen Räumen/Verbrauchern ohne Einzelraumregelung nicht ausgeschlossen werden, respektive es kann zu einer Unterversorgung von einzelnen Räumen/Verbrauchern kommen.

Die Druckschrift FR 2 931 226 A1 bezieht sich auf eine Vorrichtung und ein Verfahren zur Regelung des Gleichgewichtszustands in einem hydraulischen System, die auch auf Änderungen im System reagieren und so den üblichen hydraulischen Abgleich überflüssig machen. Zur Regelung der Raumtemperatur in einzelnen Räumen werden pro Raum die üblichen Temperatursensoren eingesetzt, deren Werte drahtlos zu einer Zentraleinheit übertragen werden.

Die Druckschrift WO 2008/039065 A1 setzt bei einem Heizungssystem ebenfalls in den jeweiligen Räumen einen Temperatursensor zur Messung der lokalen Lufttemperatur ein.

Die Druckschrift EP 1 235 130 A2 offenbart ein Verfahren zur Regelung der Raumlufttemperatur, wobei ein erster Temperaturfühler einen lokalen Wert für die Raumlufttemperatur erfasst, wobei ein zweiter Temperaturfühler die Vorlauftemperatur des Heizmediums an einem Heizkörper erfasst, und wobei die Raumlufttemperatur mittels eines Korrekturalgorithmus aus den von den beiden Temperaturfühlern gemessenen Temperaturmesswerten bestimmt wird.

DARSTELLUNG DER ERFINDUNG

Es ist daher eine Aufgabe der Erfindung, ein Verfahren der eingangs genannten anzugeben, welches die Nachteile bekannter Verfahren meidet und sich durch eine einfache Realisierbarkeit bei gleichzeitig stabilem Regelverhalten und flexiblem Einsatz auszeichnet, sowie eine Vorrichtung zur Durchführung des Verfahrens anzugeben.

Diese und andere Aufgaben werden durch die Merkmale der Ansprüche 1 und 6 gelöst.

Die Erfindung geht aus von einem Verfahren zur Regelung der Raumtemperatur in einem oder einer Gruppe von mehreren Räumen, bei welchem Verfahren die Raumtemperatur in einem Raum bzw. in einer Gruppe von mehreren Räumen durch Regelung des Massendurchflusses eines durch einen Wärmeübertrager bzw. Verbraucher fliessenden Wärmeträgerfluids nach Massgabe einer ermittelten aktuellen Raumtemperatur geregelt wird. Sie ist dadurch gekennzeichnet, dass zur Ermittlung der aktuellen Raumtemperatur jeweils der Massendurchfluss des Wärmeträgerfluids durch den Wärmeübertrager sowie die am Eingang des Wärmeübertragers herrschende Vorlauftemperatur und die am Ausgang des Wärmeübertragers herrschende Rücklauftemperatur gemessen werden, und dass zu den ermittelten Werten für den Massendurchfluss, die Vorlauftemperatur und die Rücklauftemperatur eine zugeordnete Temperatur als aktuelle Raumtemperatur ausgegeben und zur Regelung verwendet wird, und die Ausgabe der aktuellen Raumtemperatur nach Massgabe einer Funktion

$$t_{i,j} = F\left(t_{V,j}, t_{R,j}, m'_j\right) + t_{corr}(T)$$

erfolgt, wobei $t_{V,j}$ und $t_{R,j}$ die Vorlauf- bzw. Rücklauftemperatur und $m'_j$ den Massendurchfluss zum Zeitpunkt $T_j$ bezeichnen, und $t_{corr}(T)$ ein zeitabhängiges Korrekturglied ist, welches das thermische Speichervermögen des jeweiligen Wärmeübertragers bzw. Verbrauchers berücksichtigt.

Insbesondere erfolgt die Ausgabe der aktuellen Raumtemperatur nach Massgabe der Funktion

$$t_{i,j} = 0{,}5 \cdot \left[\left(t_{V,j} + t_{R,j}\right) - \left(m'_j / m'_0\right) \cdot \left(\left(t_{V,j} - t_{R,j}\right) / \left(t_{V,0} - t_{r,0}\right)\right) \cdot \left(t_{V,0} + t_{R,0} - 2t_{i,0}\right)\right] + t_{corr}(T),$$

wobei $t_{i,0}$ eine Auslegungs-Raumtemperatur, $t_{V,0}$ eine Auslegungs-Vorlauftemperatur, $t_{R,0}$ eine Auslegungs-Rücklauftemperatur und $m'_0$ einen Auslegungs-Massendurchfluss bezeichnen Das zeitabhängige Korrekturglied $t_{corr}(T)$ wird in Abhängigkeit vom Systemverhalten (Wärmeübertrager, Speichermasse) erfasst.

Eine andere Ausgestaltung des erfindungsgemässen Verfahrens ist dadurch gekennzeichnet, dass die Vorlauftemperatur bei der Regelung der Raumtemperatur bei allen Wärmeübertragern bzw. Verbrauchern einer Gruppe identisch ist.

Eine weitere Ausgestaltung des erfindungsgemässen Verfahrens ist dadurch gekennzeichnet, dass der Massendurchfluss des Wärmeträgerfluids durch den Wärmeübertrager mittels eines zugeordneten Regelventils verändert wird.

Eine noch andere Ausgestaltung des erfindungsgemässen Verfahrens ist dadurch gekennzeichnet, dass der Wärmeübertrager Teil einer Flächenheizung/-kühlung ist.

Die erfindungsgemässe Vorrichtung umfasst einen mit dem zu regelnden Raum in Wirkverbindung stehenden Wärmeübertrager, der mit einem Eingang an eine Vorlaufleitung und mit einem Ausgang an eine Rücklaufleitung angeschlossen ist, ein den Massendurchfluss durch den Wärmeübertrager steuerndes Regelventil, einen die Vorlauftemperatur in der Vorlaufleitung aufnehmenden Vorlauftemperatur-Sensor, einen die Rücklauftemperatur in der Rücklaufleitung aufnehmenden Rücklauftemperatur-Sensor und einen den Massendurchfluss durch den Wärmeübertrager aufnehmenden Durchflusssensor, wobei eine Steuereinheit mit wenigstens drei Eingängen und einem Ausgang vorgesehen ist, deren Eingänge mit dem Vorlauftemperatur-Sensor, dem Rücklauftemperatur-Sensor und dem Durchflusssensor verbunden sind, und dessen Ausgang mit dem Regelventil in Wirkverbindung steht, und die Steuereinheit einen Zuordnungsteil und einen Regelteil umfasst, wobei der Zuordnungsteil zur Zuordnung einer Raumtemperatur zu den an den Eingängen anstehenden Werten für den Massendurchfluss, die Vorlauftemperatur und die Rücklauftemperatur (tR) nach Massgabe einer Funktion

$$t_{i,j} = F\left(t_{V,j}, t_{R,j}, m'_j\right) + t_{corr}(T)$$

ausgelegt ist, wobei $t_{V,j}$ und $t_{R,j}$ die Vorlauf- bzw. Rücklauftemperatur und $m'_j$ den Massendurchfluss zum Zeitpunkt $T_j$ bezeichnen, und $t_{corr}(T)$ ein zeitabhängiges Korrekturglied ist, welches das thermische Speichervermögen des jeweiligen Wärmeübertragers bzw. Verbrauchers berücksichtigt, und wobei der Regelteil zur Betätigung des Regelventils nach Massgabe der Abweichung der zugeordneten Raumtemperatur von einem vorgegebenen Sollwert ausgelegt ist.

Eine Ausgestaltung ist dadurch gekennzeichnet, dass der Durchflusssensor und das Regelventil in der Rücklaufleitung angeordnet sind.

Eine weitere Ausgestaltung ist dadurch gekennzeichnet, dass der Wärmeübertrager Teil einer Flächenheizung/-kühlung ist.

## KURZE ERLÄUTERUNG DER FIGUREN

Die Erfindung soll nachfolgend anhand von Ausführungsbeispielen im Zusammenhang mit der Zeichnung näher erläutert werden. Es zeigen:

Fig. 1    das hydraulische und Regelschema einer herkömmlichen Heiz/Kühlanlage auf der Basis von Flächenheizungen/-kühlungen;

Fig. 2    das Schema einer Einzelregelung eines Raumes mit Flächenheizung/-kühlung gemäss einem Ausführungsbeispiel der Erfindung; und

Fig. 3    die wärmetechnische Situation im Bereich einer Fussbodenheizung, wie sie der Erfindung zugrundeliegt.

## WEGE ZUR AUSFÜHRUNG DER ERFINDUNG

Das Verfahren und die Vorrichtungen für ein oder eine Gruppe von Flächenheiz- bzw. Kühlsystemen (im folgenden Verbraucher genannt) betrifft insbesondere ein Verfahren zur Einzelraumtemperaturregelung mit motorisierten Regelventilen zur Regulierung des Durchflusses respektive der Energie durch den Verbraucher zur Konstanthaltung der Raumtemperatur bei Laständerungen, z.B. einer Änderung der internen Last durch Personen (Störsprung) oder zur Anpassung der Raumtemperatur bei Nutzereingriff (Sollwertänderung).

Das Verfahren zeichnet sich dadurch aus, dass die Regelung auf der Erfassung und Auswertung der zu- bzw. abgeführten Energie (Durchfluss durch den Verbraucher, Vor- und Rücklauftemperatur des Verbrauchers) mittels Programmcode unter Berücksichtigung der thermodynamischen Zusammenhänge beruht und damit eine direkte Raumtemperaturmessung nicht notwendig ist.

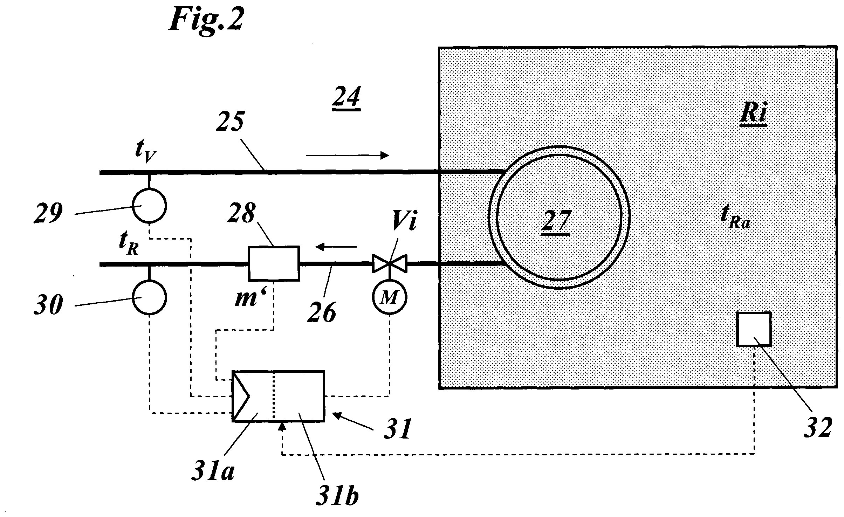

Die in Fig. 2 dargestellte Einzelraum-Temperaturregelungsvorrichtung 24 zur Einzelraumtemperaturregelung eines einem Verbraucher eindeutig zugeordneten einzelnen Raumes Ri umfasst die im Folgenden aufgeführten Vorrichtungen:

- einen Vorlauftemperatur-Sensor 29 zur Erfassung der Vorlauftemperatur ($t_V$) eines Verbrauchers oder einer Gruppe von Verbrauchern, der (die) an einer Vorlaufleitung 25 angeordnet ist (sind);

- einen Rücklauftemperatur-Sensor 30 zur Erfassung der Rücklauftemperatur ($t_R$) eines eindeutig einem Raum Ri zugeordneten Verbrauchers, in diesem Falle einer Flächenheizung/-kühlung 27;

- einen Durchflusssensor 28 zur Erfassung Massendurchflusses ($m'$) eines Verbrauchers oder einer Gruppe von Verbrauchern; bei einer Gruppe von Verbrauchern umfasst die Regelung einen Programmcode zur Aufteilung des gemessenen Gesamt-Massendurchflusses (automatischer dynamischer Abgleich, wie er Gegenstand der am 30.06.2011 eingereichten CH-Patentanmeldung Nr. 01102/11 ist) auf die einzelnen Verbraucher, welche jeweils eindeutig einem Raum Ri zugeordnet sind;

- ein Regelventil Vi mit stetiger Ansteuerung zur Begrenzung und Regelung des Massendurchflusses ($m'$) durch einen Verbraucher, welcher eindeutig einem Raum Ri zugeordnet ist, in diesem Falle die Flächenheizung/-kühlung 27;

- (optional) ein Bediengerät (Sollwertgeber 32) zur Sollwertschiebung (Anpassung an eine temporäre Unpässlichkeit), optional mit einer integrierten Raumtemperaturmessung für einen oder eine Gruppe von Räumen; die Anpassung an eine temporäre Unpässlichkeit (Sollwertschiebung) kann zudem über eine Software-Schnittstelle/Webview erfolgen;; und

- eine Steuereinheit 31 (in Form eines Programmcodes) zur Einzelraumtemperaturregelung unter Einbezug des thermischen Verhaltens eines einem Verbraucher (27) eindeutig zugeordneten Raumes Ri, die einen Zuordnungsteil 31a und einen Regelungsteil 31b umfasst.

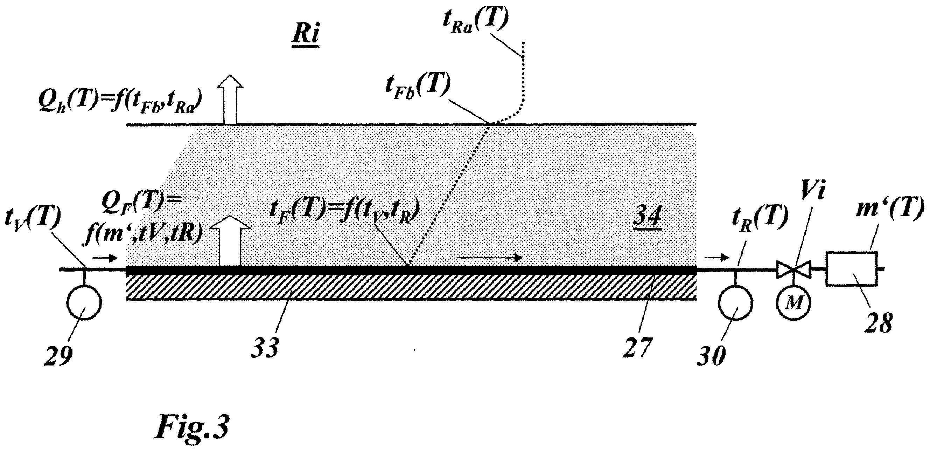

Die zugehörige wärmetechnische Situation im Bereich der Flächenheizung/-kühlung 27 ist in Fig. 3 schematisch wiedergegeben: Bei einem quasistationären Betrieb entspricht der Wärmestrom $Q_h(T)$, welcher vom Raum Ri ab- bzw. aufgenommen wird und eine Funktion der Raumtemperatur $t_{Ra}$ und der Fussbodentemperatur $t_{Fb}$ ist, dem Wärmestrom $Q_F(T)$, welcher vom durch die Fussbodenheizung 27 fliessenden Fluid an den Verbraucher ab- bzw. aufgegeben wird. In diesem Zustand befindet sich das System in thermischen Gleichgewicht, bei dem ein eindeutiger Zusammenhang zwischen Fluidtemperatur $t_F$ (Mitteltemperatur zwischen Vorlauftemperatur $t_V$ und Rücklauftemperatur $t_R$ des Verbrauchers) und der Raumtemperatur $t_{Ra}$ in Abhängigkeit des durch den Verbraucher geleiteten Wärmestroms besteht. Dieser Zusammenhang ist schematisch in Fig. 3 dargestellt und gilt ebenfalls für instationäre Zustände unter Berücksichtigung der thermodynamischen Zusammenhänge.

Der Programmcode zur Raumtemperaturregelung (Steuereinheit 31) berücksichtigt das thermodynamische Verhalten des Systems durch die Konfiguration bzw. durch ein im Programmcode integriertes Verfahren zur automatischen Adaption der Regelungsparameter zur automatischen Konfiguration an das System. Im Programmcode der Regelung ist somit ein Zusammenhang zwischen der zeitlichen Änderung der Raumtemperatur $t_{RA}(T)$ und dem zeitlichen Verhalten der Fluidtemperatur $t_F(T)$ und der vom Fluid abgegebenen bzw. aufgenommenen Wärme $Q_F(T)$ bei Störsprüngen und Sollwertänderungen hinterlegt, welche zur Einzelraumtemperaturregelung verwendet wird.

Da die Wärme nicht direkt abgegeben werden kann, sondern durch den Verbraucher geleitet werden muss, führt die zugehörige Speichermasse, welche im Beispiel der Fig. 3 zumindest die Basisschicht 33 und die Deckschicht 34 umfasst, bei instationären Vorgängen des Systems zu einer zeitlichen Verzögerung. Die Vorlauftemperatur $t_V$ bleibt bei dieser Art der Regelung unbeeinflusst, so dass die Regelung als Rücklauftemperaturregelung bezeichnet werden kann.

Den zu einem bestimmten Zeitpunkt $T_j$ erhobenen Messwerten für die Vorlauftemperatur ($t_{V,j}$), die Rücklauftemperatur ($t_{R,j}$) und den Massendurchfluss ($m'_j$) wird im Zuordnungsteil 31a der Steuereinheit 31 eine momentane Raumtemperatur $t_{i,j}$ im Raum Ri gemäss nachfolgender Gleichung (1) zugeordnet:

$$(1) \quad t_{i,j} = 0,5 \cdot \left[ \left( t_{V,j} + t_{R,j} \right) - \left( m'_j / m'_0 \right) \cdot \left( \left( t_{V,j} - t_{R,j} \right) / \left( t_{V,0} - t_{r,0} \right) \right) \cdot \left( t_{V,0} + t_{R,0} - 2 t_{i,0} \right) \right] + t_{corr}(T)$$

Mit den Parametern:

| | |
|---|---|
| $t_{i,j}$ | aktuelle Raumtemperatur [°C] |
| $t_{i,0}$ | Auslegungs-Raumtemperatur [°C] |
| $t_{V,j}$ | aktuelle Vorlauftemperatur (Gruppe) [°C] |
| $t_{R,j}$ | aktuelle Rücklauftemperatur (Strang) [°C] |
| $t_{V,0}$ | Auslegungs-Vorlauftemperatur [°C] |
| $t_{R,0}$ | Auslegungs-Rücklauftemperatur [°C] |
| $m'_j$ | aktueller Massendurchfluss (Strang) [kg/s] |
| $m'_0$ | Auslegungs-Massendurchfluss (Strang) [kg/s] |

Das zeitabhängige Korrekturglied $t_{corr}(T)$ in Gleichung (1) beinhaltet dabei das durch die thermischen Speichermassen bestimmte Verzögerungsverhalten der Flächenheizung/- kühlung bei einer sprunghaften Änderung der Belastung bzw. des Sollwertes.

Durch das beschriebene Verfahren zur Rücklauf-/Raum-Temperaturregelung kann die Ein-zelraum-Temperaturregelung auch ohne geeignete Montageorte für Raumtemperatursensoren präzise gewährleistet werden. Durch das Regelverfahren ist es ohne Zusatzaufwand möglich, den aktuellen Energiebedarf jedes Verbrauchers zur Gesamtoptimierung des Systems zu verwenden und (Energie-)Daten zur weiteren Verwendung über ein Netzwerk auszutauschen oder zu speichern.

Bezugszeichenliste

| | |
|---|---|
| 10 | Fussbodenheizung/-kühlung |
| 11 | Zentralregler |
| 12 | Wärmeerzeuger |
| 13 | Kälteerzeuger |

| | |
|---|---|
| 14 | Rücklaufsammler |
| 15 | Vorlaufsammler |
| 16 | Wärmeübertrager (Rohrschlange) |
| 17 | Raumtemperatursensor/-thermostat |
| 18 | Vorlauftemperaturfühler |
| 19 | Pumpe |
| 20 | 3-Wege-Ventil |
| 21,22 | Umschaltvorrichtung |
| 23 | Aussentemperaturfühler |
| 24 | Einzelraum-Temperaturregelungsvorrichtung |
| 25 | Vorlaufleitung |
| 26 | Rücklaufleitung |
| 27 | Flächenheizung/-kühlung (z.B. Fussbodenheizung) bzw. Wärmeübertrager |
| 28 | Durchflusssensor |
| 29 | Vorlauftemperatur-Sensor |
| 30 | Rücklauftemperatur-Sensor |
| 31 | Steuereinheit (Programmcode) |
| 31a | Zuordnungsteil |
| 31b | Regelteil |
| 32 | Sollwertgeber |
| 33 | Basisschicht |
| 34 | Deckschicht |
| M | Motor |
| m' | Massendurchfluss |
| $Q_F$ | Fluid-Wärmestrom |
| $Q_h$ | Raum-Wärmestrom |
| R1,Ri | Raum |
| $t_{Ra}, t_i$ | Raumtemperatur |
| $t_F$ | Fluidtemperatur |
| $t_{Fb}$ | Fussbodentemperatur |
| $t_V$ | Vorlauftemperatur |
| $t_R$ | Rücklauftemperatur |
| T | Zeit |
| V1,Vi | Regelventil |

## Patentansprüche

1. Verfahren zur Regelung der Raumtemperatur ($t_{Ra}$) in einem oder einer Gruppe von mehreren Räumen (R1, Ri), bei welchem Verfahren die Raumtemperatur ($t_{Ra}$,) in einem Raum bzw. in einer Gruppe von mehreren Räumen (R1, Ri) durch Regelung des Massendurchflusses (m') eines durch einen Wärmeübertrager bzw. Verbraucher (27) fliessenden Wärmeträgerfluids nach Massgabe einer ermittelten aktuellen Raumtemperatur ($t_{i,j}$) geregelt wird, wobei zur Ermittlung der aktuellen Raumtemperatur ($t_{i,j}$) jeweils der Massendurchfluss (m') des Wärmeträgerfluids durch den Wärmeübertrager (27) sowie die am Eingang des Wärmeübertragers (27) herrschende Vorlauftemperatur ($t_V$) und die am Ausgang des Wärmeübertragers (27) herrschende Rücklauftemperatur ($t_R$) gemessen werden, **dadurch gekennzeichnet, dass** zu den ermittelten Werten für den Massendurchfluss (m'), die Vorlauftemperatur ($t_V$) und die Rücklauftemperatur ($t_R$) eine zugeordnete Temperatur als aktuelle Raumtemperatur ($t_{i,j}$) ausgegeben und zur Regelung verwendet wird, und dass die Ausgabe der aktuellen Raumtemperatur ($t_{i,j}$) nach Massgabe einer Funktion $t_{i,j} = F(t_{V,j}, t_{R,j}, m'_j) + t_{corr}(T)$ erfolgt, wobei $t_{V,j}$ und $t_{R,j}$ die Vorlauf- bzw. Rücklauftemperatur und $m'_j$ den Massendurchfluss zum Zeitpunkt $T_j$ bezeichnen, und $t_{corr}(T)$ ein zeitabhängiges Korrekturglied ist, welches das thermische Speichervermögen des jeweiligen Wärmeübertragers bzw. Verbrauchers (27) berücksichtigt.

2. Verfahren nach Anspruch 1, **dadurch gekennzeichnet**, die Ausgabe der aktuellen Raumtemperatur ($t_{i,j}$) nach Massgabe der Funktion

$$t_{i,j} = 0{,}5 \cdot \left[ \left(t_{V,j} + t_{R,j}\right) - \left(m'_j / m'_0\right) \cdot \left(\left(t_{V,j} - t_{R,j}\right) / \left(t_{V,0} - t_{r,0}\right)\right) \cdot \left(t_{V,0} + t_{R,0} - 2t_{i,0}\right) \right] + t_{corr}(T)$$

erfolgt, wobei $t_{i,0}$ eine Auslegungs-Raumtemperatur, $t_{V,0}$ eine Auslegungs-Vorlauftemperatur, $t_{R,0}$ eine Auslegungs-Rücklauftemperatur und $m'_0$ einen Auslegungs-Massendurchfluss bezeichnen.

3. Verfahren nach einem der Ansprüche 1oder 2, **dadurch gekennzeichnet, dass** die Vorlauftemperatur ($t_V$) bei der Regelung der Raumtemperatur ($t_i$)bei allen Wärmeübertragern bzw. Verbrauchern einer Gruppe identisch ist.

4. Verfahren nach einem der Ansprüche 1-3, **dadurch gekennzeichnet, dass** der Massendurchfluss ($m'$) des Wärmeträgerfluids durch den Wärmeübertrager (27) mittels eines zugeordneten Regelventils ($V_i$) verändert wird.

5. Verfahren nach einem der Ansprüche 1-4, **dadurch gekennzeichnet, dass** der Wärmeübertrager Teil einer Flächenheizung/-kühlung (27)ist.

6. Vorrichtung zur Durchführung des Verfahrens nach einem der Ansprüche 1-5, umfassend einen mit dem zu regelnden Raum (Ri) in Wirkverbindung stehenden Wärmeübertrager (27), der mit einem Eingang an eine Vorlaufleitung (25) und mit einem Ausgang an eine Rücklaufleitung (26) angeschlossen ist, ein den Massendurchfluss ($m'$) durch den Wärmeübertrager (27) steuerndes Regelventil (Vi), einen die Vorlauftemperatur (tV) in der Vorlaufleitung (25) aufnehmenden Vorlauftemperatur-Sensor (29), einen die Rücklauftemperatur (tR) in der Rücklaufleitung (26) aufnehmenden Rücklauftemperatur-Sensor (30) und einen den Massendurchfluss durch den Wärmeübertrager (27) aufnehmenden Durchflusssensor (28), wobei eine Steuereinheit (31) mit wenigstens drei Eingängen und einem Ausgang vorgesehen ist, deren Eingänge mit dem Vorlauftemperatur-Sensor (29), dem Rücklauftemperatur-Sensor (30) und dem Durchflusssensor (28) verbunden sind, und dessen Ausgang mit dem Regelventil (Vi) in Wirkverbindung steht, und die Steuereinheit (31) einen Zuordnungsteil (31a) und einen Regelteil (31b) umfasst, **dadurch gekennzeichnet, dass** der Zuordnungsteil (31a) zur Zuordnung einer Raumtemperatur (ti) zu den an den Eingängen anstehenden Werten für den Massendurchfluss ($m'$), die Vorlauftemperatur (tV) und die Rücklauftemperatur (tR) nach Massgabe einer Funktion $t_{i,j} = F(t_{V,j}, t_{R,j}, m'_j) + t_{corr}(T)$ ausgelegt ist, wobei $t_{V,j}$ und $t_{R,j}$ die Vorlauf- bzw. Rücklauftemperatur und $m'_j$ den Massendurchfluss zum Zeitpunkt $T_j$ bezeichnen, und $t_{corr}(T)$ ein zeitabhängiges Korrekturglied ist, welches das thermische Speichervermögen des jeweiligen Wärmeübertragers bzw. Verbrauchers (27) berücksichtigt, und dass der Regelteil (31b) zur Betätigung des Regelventils (Vi) nach Massgabe der Abweichung der zugeordneten Raumtemperatur (ti) von einem vorgegebenen Sollwert ausgelegt ist.

7. Vorrichtung nach Anspruch 6, **dadurch gekennzeichnet, dass** der Durchflusssensor (28) und das Regelventil ($V_i$) in der Rücklaufleitung (26) angeordnet sind.

8. Vorrichtung nach einem der Ansprüche 6 oder 7, **dadurch gekennzeichnet, dass** der Wärmeübertrager Teil einer Flächenheizung/-kühlung ist.

**Claims**

1. Method for regulating the room temperature ($t_{Ra}$) in a room or in a group of multiple rooms (R1, Ri), in which method the room temperature ($t_{Ra}$) in a room or in a group of multiple rooms (R1, Ri) is regulated through regulation of the rate of mass flow ($m'$) of a heat carrier fluid, flowing through a heat exchanger or consumer (27), according to a determined present room temperature ($t_{i,j}$), wherein, for the purpose of determining the present room temperature ($t_{i,j}$), the rate of mass flow ($m'$) of the heat carrier fluid through the heat exchanger (27) and the feed temperature ($t_V$) prevailing at the inlet of the heat exchanger (27) and the return temperature ($t_R$) prevailing at the outlet of the heat exchanger (27) are each measured, **characterized in that**, to the determined values for the rate of mass flow ($m'$), the feed temperature ($t_V$) and the return temperature ($t_R$), an assigned temperature is output as the present room temperature ($t_{i,j}$) and is used for regulation, and **in that** the present room temperature $t_{i,j}$ is output according to a function $t_{i,j} = F\left(t_{V,j}, \ t_{R,j}, \ m'_j\right) + t_{corr}(T)$, where $t_{V,j}$ and $t_{R,j}$ denote the feed temperature and the return temperature, respectively, and $m'_j$ denotes the rate of mass flow, at the time $T_j$, and $t_{corr}(T)$ is a time-dependent correction term which takes into account the thermal storage capacity of the respective heat exchanger or consumer (27).

2. Method according to Claim 1, **characterized in that** the present room temperature ($t_{i,j}$) is output according to the function

$$t_{i,j} = 0,5 \cdot \left[ \left( t_{V,j} + t_{R,j} \right) - \left( m'_j / m'_0 \right) \cdot \left( \left( t_{V,j} - t_{R,j} \right) / \left( t_{V,0} - t_{r,0} \right) \right) \cdot \left( t_{V,0} + t_{R,0} - 2 t_{i,0} \right) \right] + t_{corr}(T) \;,$$

where $t_{i,0}$ denotes a design room temperature, $t_{V,0}$ denotes a design feed temperature, $t_{R,0}$ denotes a design return temperature and $m'_0$ denotes a design rate of mass flow.

3. Method according to either of Claims 1 and 2, **characterized in that**, with the regulation of the room temperature ($t_i$), the feed temperature ($t_V$) is identical for all heat exchangers or consumers of a group.

4. Method according to one of Claims 1 to 3, **characterized in that** the rate of mass flow ($m'$) of the heat carrier fluid through the heat exchanger (27) is varied by means of an assigned regulating valve ($V_i$).

5. Method according to one of Claims 1 to 4, **characterized in that** the heat exchanger is part of a surface heating/cooling arrangement (27).

6. Device for carrying out the method according to one of Claims 1 to 5, comprising a heat exchanger (27) which is operatively connected to the room (Ri) to be regulated and which is connected to a feed line (25) by way of an inlet and to a return line (26) by way of an outlet, a regulating valve (Vi) which controls the rate of mass flow ($m'$) through the heat exchanger (27), a feed temperature sensor (29) which records the feed temperature ($t_V$) in the feed line (25), a return temperature sensor (30) which records the return temperature ($t_R$) in the return line (26), and a flow sensor (28) which records the rate of mass flow through the heat exchanger (27), wherein a control unit (31) having at least three inputs and an output is provided, the inputs of which are connected to the feed temperature sensor (29), the return temperature sensor (30) and the flow sensor (28) and the output of which is operatively connected to the regulating valve (Vi), and the control unit (31) comprises an assigning part (31a) and a regulating part (31b), **characterized in that** the assigning part (31a) is designed for assigning a room temperature ($t_i$), for the values present at the inputs for the rate of mass flow ($m'$), the feed temperature ($t_V$) and the return temperature ($t_R$), according to a function $t_{i,j} = F\left( t_{V,j}, \; t_{R,j}, \; m'_j \right) + t_{corr}(T)$, where $t_{V,j}$ and $t_{R,j}$ denote the feed temperature and the return temperature, respectively, and $m'_j$ denotes the rate of mass flow, at the time $T_j$, and $t_{corr}(T)$ is a time-dependent correction term which takes into account the thermal storage capacity of the respective heat exchanger or consumer (27), and **in that** the regulating part (31b) is designed for actuating the regulating valve (Vi) according to the deviation of the assigned room temperature ($t_i$) from a predefined target value.

7. Device according to Claim 6, **characterized in that** the flow sensor (28) and the regulating valve ($V_i$) are arranged in the return line (26).

8. Device according to either of Claims 6 and 7, **characterized in that** the heat exchanger is part of a surface heating/cooling arrangement.

**Revendications**

1. Procédé pour la régulation de la température ambiante ($t_{Ra}$) dans un espace ou un groupe de plusieurs espaces (R1, Ri), procédé dans lequel on régule la température ambiante ($t_{Ra}$) dans un espace ou dans un groupe de plusieurs espaces (R1, Ri) par régulation du débit massique ($m'$) d'un fluide caloporteur s'écoulant à travers un échangeur de chaleur ou un consommateur (27) en fonction d'une température ambiante actuelle déterminée ($t_{i,j}$), dans lequel, pour la détermination de la température ambiante actuelle ($t_{i,j}$), on mesure respectivement le débit massique ($m'$) du fluide caloporteur à travers l'échangeur de chaleur (27) ainsi que la température d'arrivée ($t_V$) régnant à l'entrée de l'échangeur de chaleur (27) et la température de retour ($t_R$) régnant à la sortie de l'échangeur de chaleur (27), **caractérisé en ce qu'**aux valeurs déterminées pour le débit massique ($m'$), la température d'arrivée ($t_V$) et la température de retour ($t_R$), une température attribuée est produite comme température ambiante actuelle ($t_{i,j}$), et on l'utilise pour la régulation, et **en ce que** l'on effectue la production de la température ambiante actuelle ($t_{i,j}$) selon une fonction $t_{i,j} = F(t_{V,j}, t_{R,j}, m'_j) + t_{corr}(T)$, dans laquelle $t_{V,j}$ et $t_{R,j}$ désignent la température d'arrivée ou la température de retour et $m'_j$ désigne le débit massique à l'instant $T_j$, et $t_{corr}(T)$ est un terme correcteur dépendant du temps, qui tient compte du pouvoir d'accumulation thermique de l'échangeur de chaleur ou du consommateur respectif (27).

**2.** Procédé selon la revendication 1, **caractérisé en ce que** l'on effectue la production de la température ambiante actuelle (t$_{i,j}$) conformément à la fonction

$$t_{i,j} = 0,5 \cdot [(t_{V,j} + t_{R,j}) - (m'_j/m'_0) \cdot ((t_{V,j} - t_{R,j})/(t_{V,0} - t_{R,0})) \cdot (t_{V,0} + t_{R,0} - 2t_{i,0})] + t_{corr}(T) \text{ ,}$$

dans laquelle t$_{i,0}$ désigne une température ambiante nominale, t$_{V,0}$ une température d'arrivée nominale, t$_{R,0}$ une température de retour nominale et m'$_0$ un débit massique nominal.

**3.** Procédé selon une des revendications 1 ou 2, **caractérisé en ce que** la température d'arrivée (t$_V$) lors de la régulation de la température ambiante (t$_i$) est identique pour tous les échangeurs de chaleur ou tous les consommateurs d'un groupe.

**4.** Procédé selon l'une quelconque des revendications 1 à 3, **caractérisé en ce que** l'on change le débit massique (m') du fluide caloporteur à travers l'échangeur de chaleur (27) au moyen d'une vanne de régulation associée (V$_i$).

**5.** Procédé selon l'une quelconque des revendications 1 à 4, **caractérisé en ce que** l'échangeur de chaleur est une partie d'un chauffage/refroidissement de surface (27).

**6.** Dispositif pour la mise en oeuvre du procédé selon l'une quelconque des revendications 1 à 5, comprenant un échangeur de chaleur (27) se trouvant en liaison active avec l'espace à réguler (Ri), et qui est raccordé par une entrée à une conduite d'arrivée (25) et par une sortie à une conduite de retour (26), une vanne de régulation (Vi) commandant le débit massique (m') à travers l'échangeur de chaleur (27), un capteur de température d'arrivée (29) enregistrant la température d'arrivée (tV) dans la conduite d'arrivée (25), un capteur de température de retour (30) enregistrant la température de retour (tR) dans la conduite de retour (26), et un détecteur de débit (28) enregistrant le débit massique à travers l'échangeur de chaleur (27), dans lequel il est prévu une unité de commande (31) avec au moins trois entrées et une sortie, dont les entrées sont reliées au capteur de température d'arrivée (29), au capteur de température de retour (30) et au détecteur de débit (28), et dont la sortie est en liaison active avec la vanne de régulation (Vi), et l'unité de commande (31) comprend une partie d'attribution (31a) et une partie de régulation (31b), **caractérisé en ce que** la partie d'attribution (31a) est conçue pour l'attribution d'une température ambiante (ti) aux valeurs présentes aux entrées pour le débit massique (m'), la température d'arrivée (tV) et la température de retour (tR) conformément à une fonction t$_{i,j}$ = F(t$_{V,j}$,t$_{R,j}$,m'$_j$) + t$_{corr}$(T), dans laquelle t$_{V,j}$ et t$_{R,j}$ représentent la température d'arrivée et de retour et m'$_j$ représente le débit massique à l'instant T$_j$, et t$_{corr}$(T) est un terme correcteur dépendant du temps, qui tient compte du pouvoir d'accumulation thermique de l'échangeur de chaleur ou du consommateur respectif (27), et **en ce que** la partie de régulation (31b) est conçue pour l'actionnement de la vanne de régulation (Vi) en fonction de l'écart entre la température ambiante attribuée (ti) et une valeur de consigne prédéterminée.

**7.** Dispositif selon la revendication 6, **caractérisé en ce que** le détecteur de débit (28) et la vanne de régulation (Vi) sont disposés dans la conduite de retour (26) .

**8.** Dispositif selon une des revendications 6 ou 7, **caractérisé en ce que** l'échangeur de chaleur est une partie d'un chauffage/refroidissement de surface.

Fig.1

EP 2 788 689 B1

Fig.2

EP 2 788 689 B1

Fig.3

**IN DER BESCHREIBUNG AUFGEFÜHRTE DOKUMENTE**

**In der Beschreibung aufgeführte Patentdokumente**

- EP 0282886 A2
- FR 2931226 A1
- WO 2008039065 A1
- EP 1235130 A2